# EUROPEAN PATENT APPLICATION

(11) **EP 1 514 473 A1**
(43) Date of publication of application: **16.03.2005**
(21) Application number: 04077301.2
(22) Date of filing: 13.08.2004
(51) Int. Cl.: A01N 43/80

(54) **Low-salt or salt-free microbicidal composition based on isothiazolone derivatives and pyrion disulphide**

(30) Priority: 04.09.2003 DE 10340829
(71) Applicant: Air Liquide Santé (International), 75341 Paris Cedex 07 (FR); SCHÜLKE & MAYR GMBH, 22851 Norderstedt (DE)
(72) Inventor: Beilfuss, Wolfgang, 22339 Hamburg (DE)
(74) Representative: Conan, Philippe Claude

(57) **Abstract**

The present invention relates to a low-salt or salt-free microbicidal preparation which comprises a) at least one fungicide selected from amongst isothiazolone derivatives and b) at least one stabilizer, where the at least one stabilizer is 2,2'-dithiobis(pyridine N-oxide). The microbicidal composition according to the invention is particularly suitable for the preservation of industrial products. The invention also relates to the use of 2,2'-dithiobis(pyridine N-oxide) as stabilizer in low-salt or salt-free isothiazolone-containing microbicidal preparations.

## Description

The present invention relates to a low-salt or salt-free microbicidal composition which comprises at least one fungicide selected from amongst certain isothiazolone derivatives and, as stabilizer, 2,2'-dithiobis(pyridine N-oxide), and to their use in technical products, in particular in those which are known to be attacked frequently by bacteria, algae or fungi. The invention furthermore relates to the use of 2,2'-dithiobis(pyridine N-oxide) as stabilizer in low-salt or salt-free isothiazolone-containing preparations.

Isothiazolone-based preservatives have been employed for a long time as effective biocides with bactericidal and fungicidal activity in a variety of water-based products, for example in cooling lubricants, paints, colours, timber preservatives, or else in certain domestic products such as detergents or in cosmetics. For example, these preservatives protect objects or coatings from attack by algae and fungi which is not only visually unattractive, but, when followed by colonization by lichens or moss, may lead to damage to the material and a reduced service life. Microbial attack of objects or coatings applied to them is particularly prevalent in environments with high atmospheric humidity, for example in the food industry, in dairies, breweries or on the north faces of buildings.

Isothiazolones which have, in the past, proved to be highly effective active ingredients in preservatives for preventing the growth of microorganisms in water-based systems and the associated disadvantages are, in particular, mixtures of 5-chloro-2-methyl-2,3-dihydroisothiazol-3-one (CMI) and 2-methyl-2,3-dihydroisothiazol-3-one (MI). The individual substances CMI and MI are normally found in commercially available products in the form of a mixture, for example a 3:1 mixture in aqueous saliferous solution in Kathon 886.

However, the disadvantage of isothiazolones is their instability in preparations, for example with regard to prolonged storage, high temperatures, high pH values and the like. This is why suitable stabilizers must be added to isothiazolone-containing preparations in order to prevent premature decomposition during storage, which results in ineffective compounds and in precipitation.

A series of effective stabilizers is presently available, depending on the composition of isothiazolone-containing formulations.

For example, metal salts have been used for a long time for stabilizing isothiazolone-containing preparations, cf. US-A-3,870,795 and US-A-4,067,878. Further examples of aqueous preparations which are based on the active ingredient combination CMI/MI and which are stabilized with metal salts are the commercial products Kathon 886 (mixture of magnesium nitrate and magnesium chloride), Parmetol® K 20 (copper salts and magnesium salts) and Permetol® K 25 (sodium salts).

However, salt-stabilized isothiazolone-containing preparations entail problems in a number of technical applications in which salts or electrolytes may have adverse effects. For example, salts are capable of influencing the structure of sensitive emulsions, for example owing to the fact that such emulsions coagulate as the result of salt being added. Moreover, many known, salt-stabilized preservatives tend to form solids, which is due to interaction with other salts in aqueous systems or with certain, salt-forming organic compounds, conversion into organic salts or, quite simply, incompatibility with the system.

The preparation of salt-free CMI/MI preservatives thus constitutes a particular challenge, in particular because salt-free preparations are employed as preservatives in products and industrial processes, in particular where metal salts may bring about problems such as corrosion, coagulation of latices, insolubility in nonaqueous media, interactions with the substrate to be stabilized, and the like.

The prior art knows various salt-free stabilizers for isothiazolone-containing preservatives.

For example, EP-A-0 375 367, EP-A-0 411 750 and EP-A-0 530 986 disclose certain organic stabilizers for isothiazolones.

US-A-4,165,318 and US-A-4,129,448 disclose formaldehyde or formaldehyde-releasing chemicals as stabilizers for isothiazolone-containing preparations.

EP-A-0 315 464 discloses ortho esters and EP-A-0 342 852 epoxides as stabilizers.

However, even the known salt-free, for example organic, stabilizers still entail problems. The salt-free CMI/MI preservatives prepared with them are frequently insufficiently stable without addition of further suitable stabilizers, and form precipitates, either spontaneously or after short-term storage. Moreover, owing to their oxidizing characteristics, some salt-free stabilizers are incompatible with other formulations constituents, which may lead to the formation of toxicologically unassessed by-products. The use of other stabilizers is undesirable for toxicological or ecotoxicological reasons. For example, formaldehyde-releasing compounds, oxidizing compounds or brominating compounds are toxicologically unacceptable. Under certain conditions, nitrosamine formation may also result.

DE 195 34 532 A1 discloses additive mixtures for cooling lubricant products which are based on isothiazolones and solubilizers such as, for example, phenoxyethanol, which may contain, as stabilizer, a sulphur-containing compound or a salt thereof, which may combine reversibly with the isothiazolone to form a product. The specific problems which the stabilization of salt-free isothiazolone-containing preservatives entails, are, however, not addressed in this publication.

The object of the present invention is therefore the provision of an improved isothiazolone-containing preparation in which only little or no salt or electrolytes are present, where, simultaneously, a high degree of stability during the manufacture and storage of the preparation is attained and the microbicidal activity of the isothiazolones is retained for the longest possible time.

This object is achieved by the low-salt or salt-free microbicidal composition according to Claim 1, which comprises
a) at least one fungicide selected from among isothiazolone derivatives of the formula 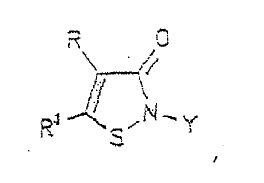 in which
   Y is a (C₁-C₁₈)-alkyl or (C₃-C₁₂)-cycloalkyl group which can be substituted by one or more hydroxyl, halogen, cyano, alkylamino, dialkylamino, aryl, amino, carboxyl, carbalkyloxy, alkoxy, aryloxy, alkylthio, arylthio, haloalkoxy, cycloalkylamino, carbamoxy or isothiazolonyl groups, an unsubstituted or halogen-substituted (C₂-C₈)-alkenyl or alkynyl group, a (C₇-C₁₀)-aralkyl group which can be substituted by one or more halogen atoms or one or more (C₁-C₄)-alkyl or (C₁-C₄)-alkoxy groups, or an aryl group which can be substituted by one or more halogen atoms, nitro, (C₁-C₄)-alkyl, (C₁-C₄)-alkylacrylamino, carb(C₁-C₄)-alkoxy or sulphamyl groups, and
   R and R¹ are in each case independently hydrogen, halogen, a (C₁-C₄)-alkyl group or a (C₄-C₈)-cycloalkyl group or are linked with one another to form a benzoisothiazolonyl group, and
b) at least one stabilizer,
characterized in that the at least one stabilizer is 2,2'-dithiobis(pyridine N-oxide).

Surprisingly, it has emerged that, despite the fact that the microbicidal composition according to the invention constitutes a low-salt or salt-free isothiazolone-containing preparation, it has a high degree of stability and forms no precipitates, either spontaneously or after prolonged storage. The advantages of the invention can be achieved by addition of suitable amounts of 2,2'-dithiobis(pyridine N-oxide) (pyrion disulphide) as stabilizer. The microbicidal composition according to the invention is particularly suitable for those applications in which salts or electrolytes have an adverse effect, for example in the case of sensitive emulsions.

Further advantageous embodiments of the microbicidal composition according to the invention can be seen from the dependent claims.

The microbicidal composition according to the invention is a low-salt or salt-free isothiazolone-based preparation. In the present context, the term "low-salt" indicates that the salt content in the preparation is below a certain limit. In a preferred preparation, the salt content in the preparation according to the invention amounts to less than 1% by weight, preferably less than 0.2% by weight, and in particular less than 0.1% by weight (in each case based on the weight of the total composition). The term "salt-free" means that the microbicidal composition is essentially free from any salt, i.e. that only traces of salt around the detection limit of conventional analytical methods for determining the salt content (for example 500 ppm) or less are present in the microbicidal composition according to the invention, such as less than 200 ppm and preferably less than 100 ppm (in each case based on the weight of the total composition). Even more preferably, the microbicidal composition according to the invention is salt-free.

The term "salt" is understood as meaning, for the purposes of the present invention, not only those salts which have been employed to date as stabilizer salts in isothiazolone-containing preparations, such as, for example, those which are disclosed in US-A-3,870,795 and 4,067,878, but also those which are added to the preparations for other purposes, for example as buffers, preservatives, corrosion inhibitors or catalysts. In a further preferred embodiment, the microbicidal composition contains no salt selected from amongst salts of 2-mercaptopyridine N-oxide, preferably pyrithione-sodium and pyrithione-zinc, copper salts, magnesium salts, in particular magnesium nitrate and magnesium chloride, sodium salts, in particular NaBrO₃, periodates such as sodium periodate and iodates such as sodium iodate.

As component (a), the microbicidal composition according to the invention comprises at least one fungicide selected from among isothiazolone derivatives of the formula 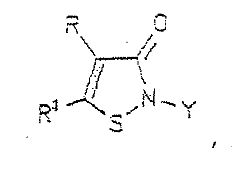 in which
Y is a (C₁-C₁₈)-alkyl or (C₃-C₁₂)-cycloalkyl group which can be substituted by one or more hydroxyl, halogen, cyano, alkylamino, dialkylamino, aryl, amino, carboxyl, carbalkyloxy, alkoxy, aryloxy, alkylthio, arylthio, haloalkoxy, cycloalkylamino, carbamoxy or isothiazolonyl groups, an unsubstituted or halogen-substituted (C₂-C₈)-alkenyl or alkynyl group, a (C₇-C₁₀)-aralkyl group which can be substituted by one or more halogen atoms or one or more (C₁-C₄)-alkyl or (C₁-C₄)-alkoxy groups, or an aryl group which can be substituted by one or more halogen atoms, nitro, (C₁-C₄)-alkyl, (C₁-C₄)-alkylacrylamino, carb (C₁-C₄)-alkoxy- or sulphamyl groups, and
R and R¹ are in each case independently hydrogen, halogen, a (C₁-C₄)-alkyl group or a (C₄-C₈)-cycloalkyl group or are linked with one another to form a benzoisothiazolonyl group.

Preferred isothiazolone derivatives are selected from among 2-octyl-2-H-isothiazolin-3-one, benzisothiazolone, 5-chloro-2-methyl-4-isothiazolin-3-one, 4,5-dichloro-2-octyl-2H-isothiazol-3-one and 2-methyl-4-isothiazolin-3-one. Even more preferably, the isothiazolone derivative employed is a mixture of 5-chloro-2-methyl-4-isothiazolin-3-one (CMI) and 2-methyl-4-isothiazolin-3-one (MI). Such mixtures of the single substances CMI and MI are present in commercial products in different weight ratios in relation to one another. For example, Kathon 886 contains a CMI/MI mixture in a ratio of 3:1 in aqueous saliferous solution. In the microbicidal composition according to the invention, the weight ratio of 5-chloro-2-methyl-4-isothiazolin-3-one to 2-methyl-4-isothiazolin-3-one in the mixture amounts to 100:1 to 1:100, preferably 10:1 to 1:10 and in particular 5:1 to 1:1. Even more preferably, the weight ratio of 5-chloro-2-methyl-4-isothiazolin-3-one to 2-methyl-4-isothiazolin-3-one amounts to 3:1.

The microbicidal composition according to the invention comprises 2,2'-dithiobis(pyridine N-oxide) as the at least one stabilizer (component b)). This compound is also referred to as pyrion disulphide or Omadine disulphide; it is currently only commercially available as an approximately 40% aqueous suspension. In the production of pyrion disulphide, handling the pulverulent product is complicated and requires not inconsiderable safety measures (for example protection from dust). It is also possible to prepare pyrion disulphide dispersions; however, such dispersions must be stabilized (cf. H.P. Fiedler, Lexikon der Hilfsstoffe [Dictionary of Additives], Editio Cantor Verlag, Aulendorf, 4th Edition, 1996, p. 1300).

In a preferred embodiment, a stabilizer solution containing 2,2'-dithiobis(pyridine N-oxide) is employed as the at least one stabilizer (component b)).

This stabilizer solution is obtainable by a method in which at least one pyrithione salt is reacted with at least one oxidant. As is known, pyrithione is an abbreviation of pyridine-2-thiol 1-oxide (also termed Omadine) and can form corresponding salts.

The reaction of the pyrithione salt with the oxidant is preferably carried out in a solvent, more preferably in aqueous solution and in particular in dilute aqueous solution. Besides water, the solvent employed for the reaction may also contain alcohols, glycols and/or glycol ethers. Suitable pyrithione salts are preferably alkali metal salts and in particular pyrithione-sodium. For example, a 40% strength aqueous solution of pyrithione-sodium may be employed. Other pyrithione salts, such as pyrithione-zinc, are likewise suitable, but are less preferred owing to the fact that they are less soluble in water.

Suitable oxidants are, in general, any compounds which are capable of converting the pyrithione salt, for example pyrithione-sodium, into pyrion disulphide. In particular, the oxidants should be suitable for use in aqueous solutions. Hydrogen peroxide (H₂O₂), for example in the form of a 30% by weight or 35% by weight strength stabilized solution of H₂O₂ in water, is employed as the preferred oxidant in the present invention. In a preferred embodiment, the molar ratio of pyrithione salt to oxidant amounts to 1:0.5 to 1:5, preferably 1:0.5 to 1:2 and in particular 1:0.5 to 1:0.55. This means that minor excesses of oxidant are particularly advantageous. The pyriondisulphide-containing stabilizer solution can be used as a preliminary solution for preparation of isothiazolone-containing preparations, but is also suitable as stock solution for stabilizing isothiazolones or isothiazolone-containing preparations. If used as stock solution, the stabilizer solution is preferably in concentrated form.

To accelerate the reaction of the pyrithione salt with the oxidant, the pH of the reaction medium, in particular of the aqueous reaction medium, is brought to neutral (for example pH < 8 to 6) or weakly acidic (for example pH < 6 to 2) and maintained at such a value during the entire reaction. Moreover, it is preferred that the reaction is carried out over a period of 5 minutes to 4 hours, preferably up to 120 minutes and in particular up to 60 minutes. Suitable reaction temperatures are in the range of from 0 to 80°C, preferably 10 to 40°C and in particular 20 to 30°C. If appropriate, the stabilizer solution obtained after the reaction can be filtered in order to remove troublesome solid components. Furthermore, the reaction product can be concentrated by known methods (for example by stripping off all or some of the solvent in vacuo; choosing the relative concentrations in the reaction in such a way that the solubility of pyrion disulphide in water of 0.9% by weight is exceeded) and separated from the mother liquor by methods which are likewise known (for example filtration; if appropriate, this is followed by washing with ice-water). The resulting moist crude product can be employed as stabilizer without further purification.

The amounts of pyrion disulphide which are stated hereinbelow refer to this compound itself and not to further components, for example, solvents, which may be present in the stabilizer solution prepared with pyrithione salt and oxidant.

Surprisingly, it was possible to stabilize isothiazolone-containing preparations against the premature degradation of active ingredient and the formation of precipitates by using the above-described, in-situ-prepared pyrion-disulphide-containing stabilizer solution. The advantage of using pyrion disulphide prepared in situ by reacting pyrithione salt with oxidant in a preferably aqueous medium is that no pulverulent stabilizer components have to be handled. This avoids the generation of dust when preparing the stabilized solution and also has economic advantages since the pure stabilizer pyrion disulphide does not have to be isolated.

Furthermore, the microbicidal composition according to the invention comprises, as component c), at least one solvent and/or solubilizer which is preferably selected from amongst water, alcohols, glycols, polyalkylene glycols, polyols or derivative such as ethers or esters, trialkyl orthoformates and aliphatic and/or aromatic hydrocarbons. However, water is most preferred.

The microbicidal composition according to the invention may, if appropriate, contain one or more additives as component d), for example corrosion inhibitors, alkalizing agents, colorants, fragrances, viscosity modifiers, antifoams, emulsifiers, dispersants, complexing agents, detergent components, surfactants, pigments, essential oils, odour-modifying additives, lubricant additives, maintenance additives, fillers and polymers. Moreover, further microbicidal active ingredients such as, for example, compounds for the sustained release of formaldehyde, such as dimethylol-urea, ethylene glycol bishemiformal and tetrahydro-1,3,4,8-tetrakis(hydroxymethyl)imidazole(4,5-d)-imidazole-2,5(1H,3H)dione and organohalogen compounds such as bronopol, 2-bromo-2-(bromomethyl)pentane-dinitrile (DBDCB) and 3-iodo-2-propynyl butylcarbamate (IPBC) may be present in the microbicidal composition according to the invention. In addition, component b) may contain further stabilizers, such as the compounds described above as the prior art, in addition to 2,2'-dithiobis(pyridine N-oxide). The presence of further active ingredients or stabilizers may in some cases result in synergistically increased activities. However, it is preferred that the isothiazolone derivative (component a)) and the stabilizer 2,2'-di-thiobis(pyridine N-oxide) (component b)), for example in the form of the above-described stabilizer solution, are employed in each case on their own in the microbicidal composition according to the invention.

In a further preferred embodiment, the microbicidal composition according to the invention contains the components a) to d) in the following amounts (in each case based on the weight of the total composition):
a) 0.01 to 99.99% by weight (preferably 5 to 40% by weight and in particular 1 to 20% by weight),
b) 0.0001 to 5% by weight (preferably 0.001 to 1% by weight and in particular 0.01 to 0.4% by weight),
c) 0 to 99.9899% by weight (preferably 50 to 99% by weight and in particular 80 to 98% by weight) and
d) if appropriate, 0 to 50% by weight (preferably 1 to 40% by weight and in particular 5 to 20% by weight).

More preferably, the microbicidal composition according to the invention contains
a) 0.1 to 5% by weight (preferably 0.5 to 3% by weight and in particular 0.95 to 1.55% by weight) of 5-chloro-2-methyl-4-isothiazolin-3-one and 0.03 to 1.8% by weight (preferably 0.15 to 1% by weight and in particular 0.3 to 0.5% by weight) of 2-methyl-4-isothiazolin-3-one,
b) 0.0001 to 1% by weight (preferably 0.01 to 0.5% by weight and in particular 0.15 to 0.25% by weight) of 2,2'-dithiobis(pyridine N-oxide) and
c) 50 to 99.8699% by weight (preferably 80 to 99.5% by weight and in particular 97.7 to 98.6% by weight) of water
(in each case based on the weight of the total composition).

In accordance with the invention, the microbicidal composition may consist only of the abovementioned components in the amounts stated.

The microbicidal composition according to the invention is prepared by simply mixing component a) with component b) and, if appropriate, further constituents such as solvents and/or solubilizers and additives (component c) and d)).

The invention also relates to the use of the microbicidal composition according to the invention in technical products, in particular those which are to be protected against bacterial and/or fungal attack. The microbicidal composition is thus suitable as additive for a series of technical products, for example plant protection compositions, compositions for the treatment of seed, technical preservatives, in particular preservatives for packaging, additives for cooling lubricants, fuel additives, paints, colours, technical dispersions or emulsions, disinfectants, in particular in fields where increased fungal attack can be expected, compositions for controlling parasites and plants, pruning compounds, film preservatives for external and, in particular, internal use, timber preservatives or preservatives for the fountain solution preservation of printing plates in the printing and photographic industries. The microbicidal composition according to the invention is especially useful for technical products and processes where salts or electrolytes exert disruption influences, for example in sensitive emulsions whose structure can be influenced by electrolytes. In general, however, use of the microbicidal composition according to the invention is contemplated in any water-based system in order that germ growth and associated disadvantages may be avoided.

Surprisingly, low-salt or salt-free isothiazolone-containing preparations can be stabilized by employing small amounts of pyrion-disulphide, which is demonstrated for example by the less pronounced, or negligible, tendency to develop deposits or cloudiness, either spontaneously or after short-term storage, but also after prolonged storage. This has the advantage that stabilizer salts which have previously been used in isothiazolone-containing preparations can be dispensed with. Moreover, they constitute an alternative to salt-free stabilizers such as, for example, DBDCB, bronopol and H₂O₂, which are insufficiently active, which are incompatible with other formulation constituents owing to the oxidizing properties, which may lead to the formation of toxicologically unassessed by-products, or else whose use is not advantageous for other toxicological or ecotoxicological reasons.

Furthermore, the invention also relates to the use of 2,2'-dithiobis(pyridine N-oxide) as stabilizer in a low-salt or salt-free microbicidal composition containing at least one fungicide selected from among isothiazolone derivatives of the formula 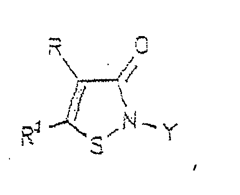 in which
Y is a (C₁-C₁₈)-alkyl or (C₃-C₁₂)-cycloalkyl group which can be substituted by one or more hydroxyl, halogen, cyano, alkylamino, dialkylamino, aryl, amino, carboxyl, carbalkyloxy, alkoxy, aryloxy, alkylthio, arylthio, haloalkoxy, cycloalkylamino, carbamoxy or isothiazolonyl groups, an unsubstituted or halogen-substituted (C₂-C₈)-alkenyl or alkynyl group, a (C₇-C₁₀)-aralkyl group which can be substituted by one or more halogen atoms or one or more (C₁-C₄)-alkyl or (C₁-C₄)-alkoxy groups, or an aryl group which can be substituted by one or more halogen atoms, nitro, (C₁-C₄)-alkyl, (C₁-C₄)-alkylacrylamino, carb(C₁-C₄)-alkoxy or sulphamyl groups, and
R and R¹ are in each case independently hydrogen, halogen, a (C₁-C₄)-alkyl group or a (C₄-C₈)-cycloalkyl group or are linked with one another to form a benzoisothiazolonyl group.

In a preferred embodiment of the use according to the invention, the abovementioned stabilizer solution is employed as stabilizer in the low-salt or salt-free microbicidal preparation which can be obtained by a method in which at least one pyrithione salt is reacted with at least one oxidant.

The stabilizer 2,2'-dithiobis(pyridine N-oxide) is preferably employed in an amount of less than 0.4% by weight, more preferably less than 0.1% by weight and in particular less than 0.05% by weight (based on the microbicidal preparation).

In a preferred embodiment, the microbicidal preparation is the microbicidal composition according to the invention. Thus, the compounds which have already been described above are employed as preferred isothazolone derivatives, stabilizers, solvents, additives and the like.

The invention is illustrated in greater detail with reference to the following examples. Unless otherwise specified, all percentages are by weight.

### Examples

### Example 1

First, a pyrion-disulphide-containing stabilizer solution was prepared. To this end, 0.81 g of sulphuric acid (96% strength) in 100 g of fully demineralized water was added with stirring to 5.9 g of pyrithione-sodium (40% strength) in 100 g of fully demineralized water. A fine yellow precipitate formed. 1 g of hydrogen peroxide (30% strength) in 100 g of fully demineralized water was added with stirring, and the resulting mixture was stirred for approximately 30 minutes. The result was a clear yellow stabilizer solution.

Using this stabilizer solution, compositions A and D according to the invention were prepared by adding 120 g of Kathon 886 (13.9% strength) - made up to 700 g with fully demineralized water - to this stabilizer solution. The result was a clear yellow solution containing approximately 12% of Kathon 886, approximately 0.2% of pyrion disulphide and small amounts of sodium sulphate. Kathon 886 is a 3:1 mixture of CMI and MI in aqueous saliferous solution.

After the isothiazolone-containing preparation thus obtained had been stored for 45 months at 20°C, the solution remained unchanged: clear, yellow and low in odour.

### Example 2

Stability studies were carried out with the preparation of Example 1 (preparations A and D) in comparison with unstabilized CMI/MI preparations (B and E) and with pure pyrion-disulphide-stabilized CMI/MI preparations (C and F). Preparations A to C were stored in glass vessels (100 ml, clear glass) at 25°C and 40°C, preparations D to F were stored in 100 ml polyethylene flasks (PE flasks; PEHD Lupolen 4261A from BASF; Schülke & Mayr 18024)). The appearance, the Gardner colour number, the N-methylisothiazolinone (MI) content and the 5-chloro-N-methylisothiazolinone (CMI) content and the drop in chloromethylisothiazolinone (CMI) with increasing storage time were determined. The results of these studies are compiled in Table I.

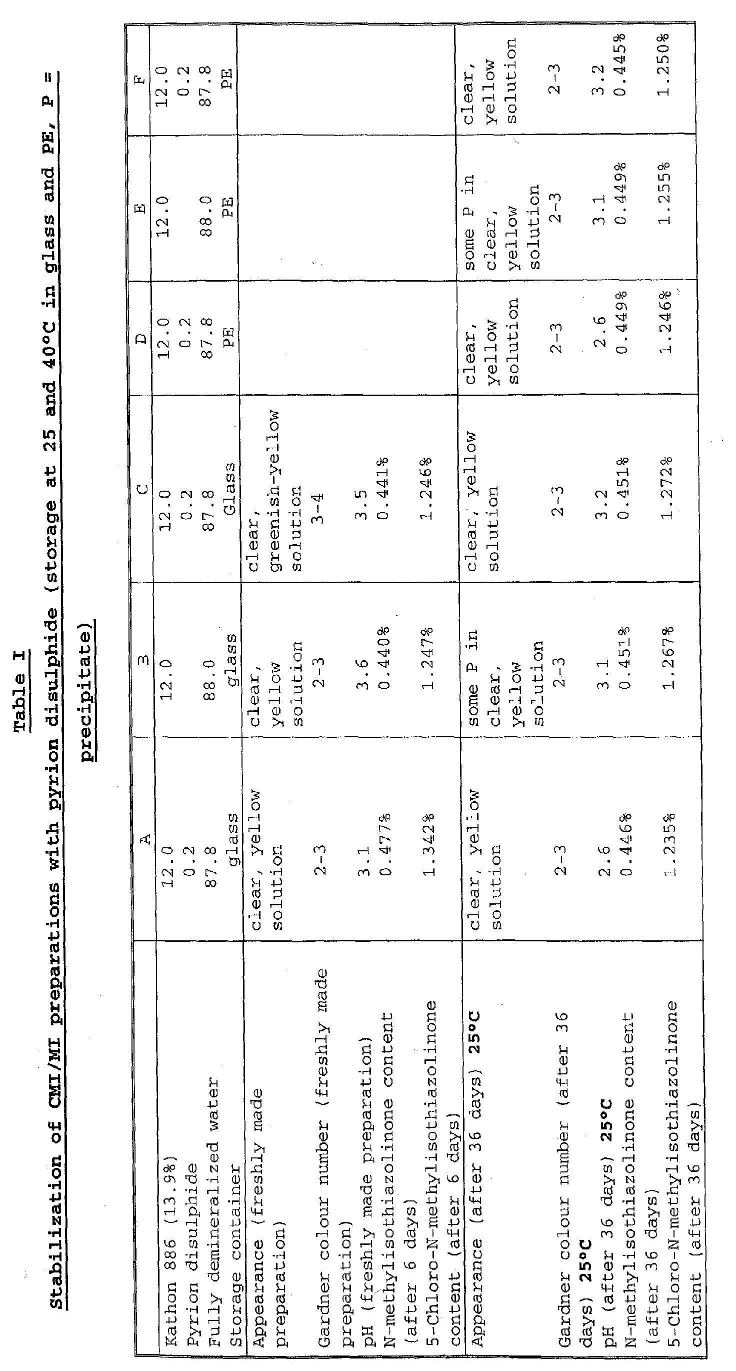

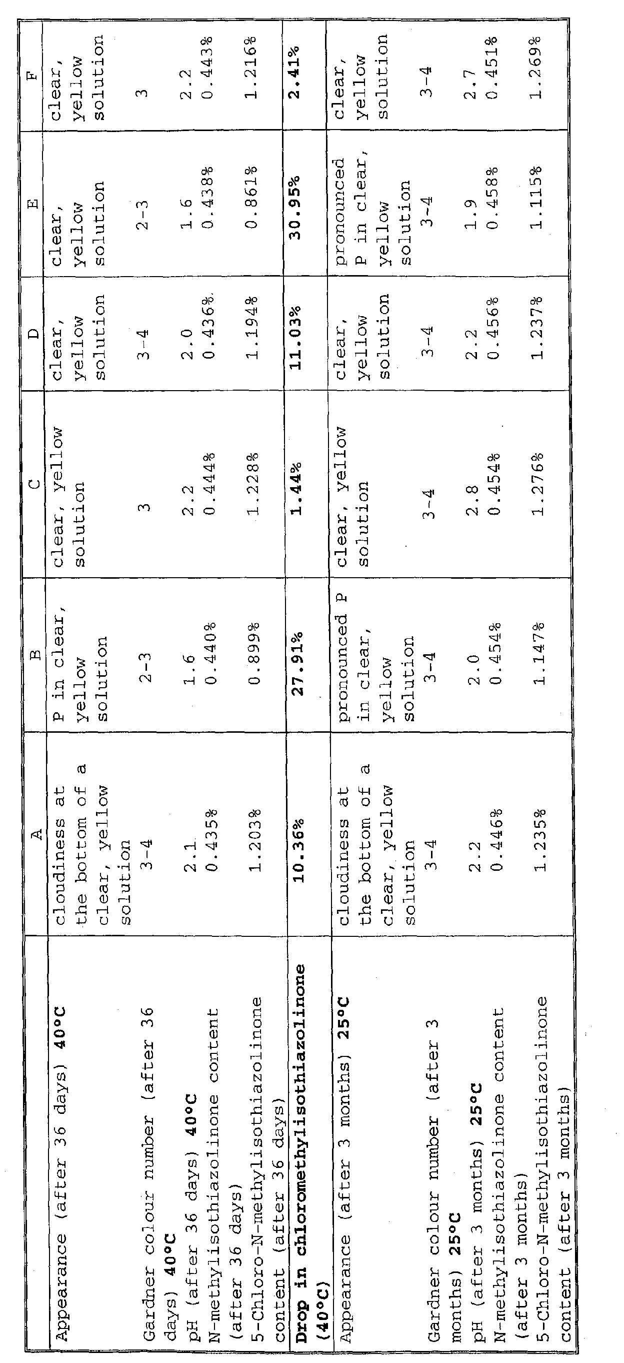

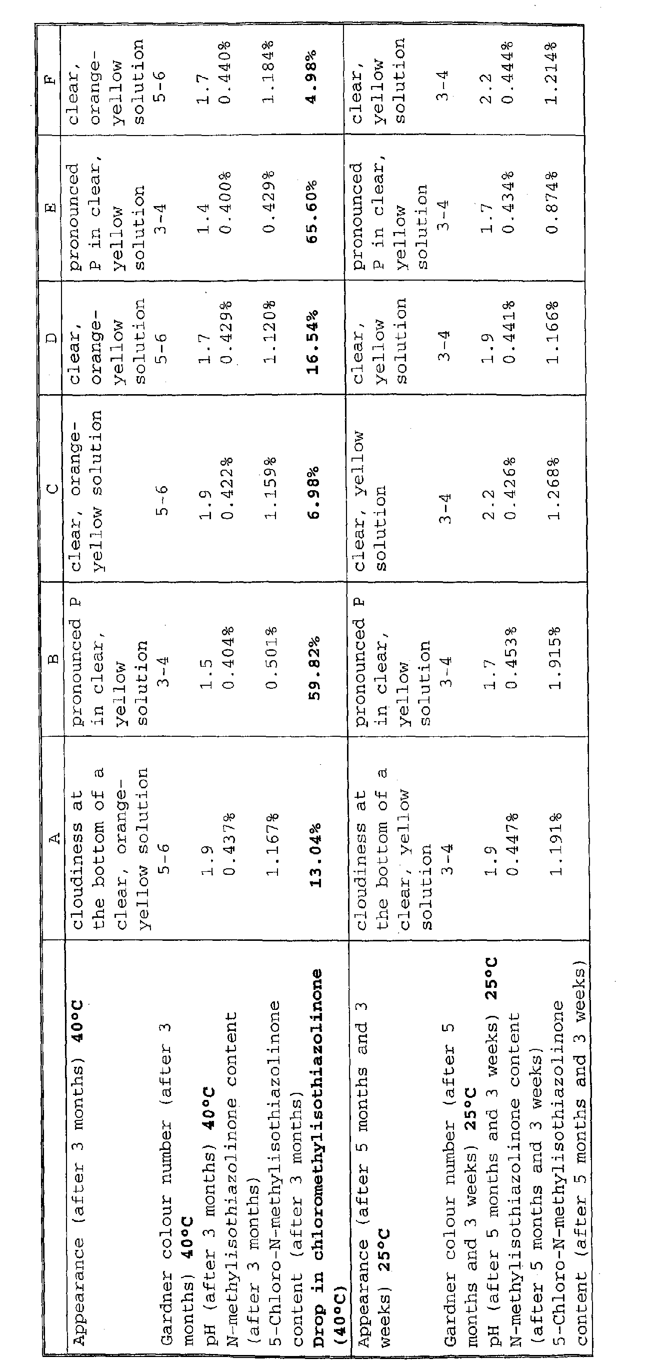

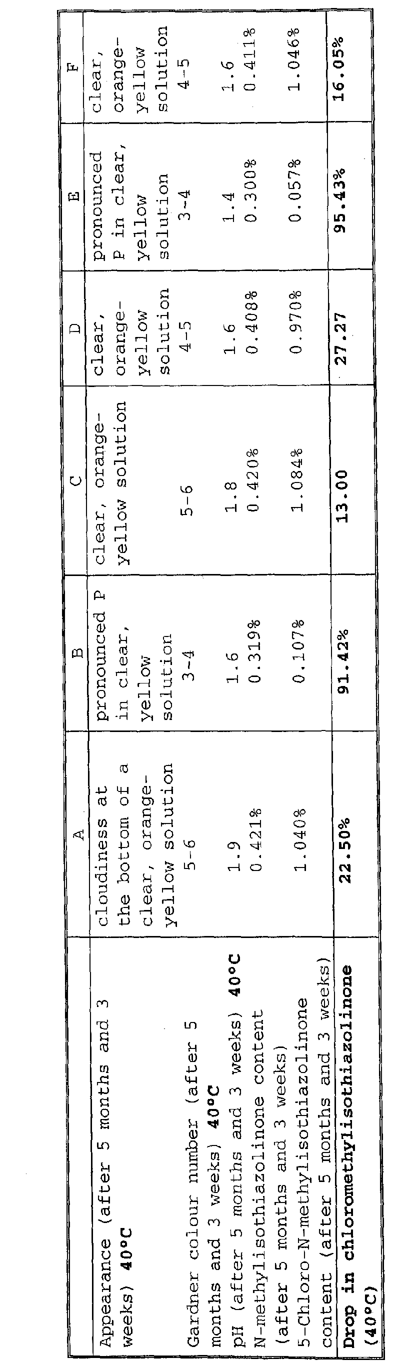

These studies demonstrate that the small amount of 0.2% of pyrion disulphide has a good stabilizing effect in microbicidal compositions according to the invention. Thus, the compositions prepared with addition of pyrion disulphide have a much higher active ingredient content (MI, CMI) after prolonged storage, both in glass containers and in PE containers, than compositions B and E, which were prepared without addition of pyrion disulphide. Moreover, it was found that CMI/MI preparations which had been stabilized with the in-situ-prepared stabilizer solution (cf. preparations A and D) revealed similarly high MI and CMI contents, even after prolonged storage, which contents were comparable with the contents in preparations which had been stabilized with pure pyrion disulphide (C and F).

### Example 3

A basic preparation which contained 88.34% of purified water, 6.00% of bromo-2-nitropropane-1,3-diol and 5.66% of Kathon 39 FG was made. The basic preparation was a clear, yellow solution with a pH of 3.6. Kathon 39 FG is a mixture of CMI and MI prepared with solvent and a low salt and water content (available from Rohm & Haas Company). Thereafter, 100 g of the basic preparation were brought to a pH of 5.16 with triethanolamine (preparation A) and with imidazole to a pH of 5.32 (preparation B). Preparation C was prepared with the addition of 0.1% of pyrion disulphide to 100 g of the basic preparation. The basic preparation D (without addition) acted as reference. The appearance of a freshly made preparation and the appearance as affected by increasing storage times were examined. In addition, the pH of all preparations was tested after 35 days. These results are compiled in Table II.

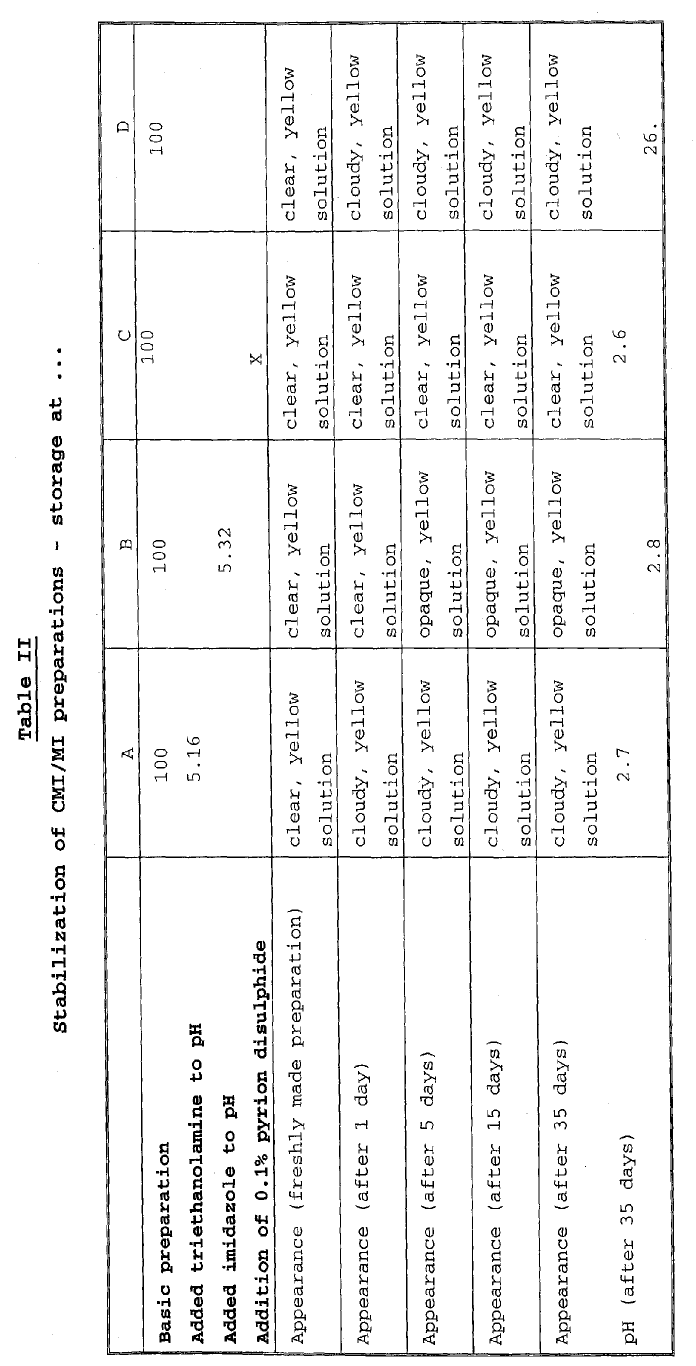

These results demonstrate that the stabilization of an aqueous, CMI/MI-based preparation which already contained a substantial amount of a prior-art organic stabilizer, viz. 6.00% of bromo-2-nitropropane-1,3-diol, was improved by the addition of 0.1% of pyrion disulphide, even beyond that of a reference composition (basic preparation D), which contained only this amount of bromo-2-nitropropane-1,3-diol. Moreover, the addition of small amounts of imidazole likewise has a stabilizing effect on the composition, albeit to a lesser extent.

### Testing procedures

The Gardner colour number is defined in DIN-ISO 4630. The pale yellow Gardner colour numbers (1 to 8) are based on potassium chloroplatinate solutions, while the colour numbers 9 to 18 are based on iron(III) chloride, cobalt(II) chloride and solutions of hydrochloric acid.

The preparation in question was filled into a cuvette and the colour number was subsequently measured with the aid of a colorimeter type LICO® 200 (Dr Lange GmbH, Berlin).

To measure the N-methylisothiazolinone and 5-chloro-N-methylisothiazolinone contents, the method of choice was HPLC; 1 g of sample was weighed into a 100 ml volumetric flask and made up to volume with 85% H₃PO₄ (0.1% strength)/15% methanol (5% THF). The sample was subsequently filtered through a 0.45 *µ*m filter and injected into the instrument. As reference sample, 90 mg of Kathon 886 were weighed into a 100 ml volumetric flask and made up to volume with 85% H₃PO₄ (0.1% strength)/15% methanol (5% THF), subsequently filtered through a 0.45 *µ*m filter and injected into the instrument. The instrument was an HPLC combination of a pump (Waters 600), a detector (Waters PDA 996), an injection system (Waters Autosampler WISP 717), a column (Nucleosil 100, C 18, 10 *µ*m, 250 × 4 mm i.d. with the eluent A = H₃PO₄ (0.1% strength (g/g)) and B = 5% (v/v) THF in methanol, 85% A/15% B, 10 minutes, isocratic, then washing and conditioning of the column, flow rate 3.0 ml/min, wavelength unchlor., chlor. ISO: 273 nm, injection volume 10 *µ*l.
Methanol: Merck, Art. No. 6007, LiChrosolv, gradient grade;
Tetrahydrofuran: Merck, Art. No. 8101; LiChrosolv;
Phosphoric acid: Merck, Art. No. 552, suprapur, 85% strength;
Kathon 886, SR 1020.

The drop in chloromethylisothiazolinone was calculated by deducting the value at a given time from the initial value.

## Claims

1. Low-salt or salt-free microbicidal composition comprising
a) at least one fungicide selected from among isothiazolone derivatives of the formula 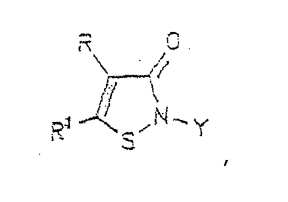 in which
Y is a (C₁-C₁₈)-alkyl or (C₃-C₁₂)-cycloalkyl group which can be substituted by one or more hydroxyl, halogen, cyano, alkylamino, dialkylamino, aryl, amino, carboxyl, carbalkyloxy, alkoxy, aryloxy, alkylthio, arylthio, haloalkoxy, cycloalkylamino, carbamoxy or isothiazolonyl groups, an unsubstituted or halogen-substituted (C₂-C₈)-alkenyl or alkynyl group, a (C₇-C₁₀)-aralkyl group which can be substituted by one or more halogen atoms or one or more (C₁-C₄)-alkyl or (C₁-C₄)-alkoxy groups, or an aryl group which can be substituted by one or more halogen atoms, nitro, (C₁-C₄)-alkyl, (C₁-C₄)-alkylacrylamino, carb(C₁-C₄)-alkoxy or sulphamyl groups, and
R and R¹ are in each case independently hydrogen, halogen, a (C₁-C₄)-alkyl group or a (C₄-C₈)-cycloalkyl group or are linked with one another to form a benzoisothiazolonyl group, and
b) at least one stabilizer,
**characterized in that** the at least one stabilizer is 2,2'-dithiobis(pyridine N-oxide).

2. Composition according to Claim 1, **characterized in that** the salt content in the composition amounts to less than 1% by weight, preferably less than 0.2% by weight and in particular less than 0.1% by weight (in each case based on the weight of the total composition).

3. Composition according to Claim 1, **characterized in that** it is essentially free from any salt.

4. Composition according to one of Claims 1 to 3, **characterized in that** it contains no salt selected from amongst salts of 2-mercaptopyridine N-oxide, preferably pyrithione-sodium and pyrithione-zinc, copper salts, magnesium salts, in particular magnesium nitrate and magnesium chloride, sodium salts, in particular NaBrO₃, periodates such as sodium iodate and iodates such as sodium iodate.

5. Composition according to one of Claims 1 to 4, **characterized in that** the isothiazolone derivative is selected from amongst 2-octyl-2-H-isothiazolin-3-one, benzisothiazolone, 5-chloro-2-methyl-4-isothiazolin-3-one and 2-methyl-4-isothiazolin-3-one.

6. Composition according to Claim 5, **characterized in that** the isothiazolone derivative is a mixture of 5-chloro-2-methyl-4-isothiazolin-3-one and 2-methyl-4-isothiazolin-3-one.

7. Composition according to Claim 6, **characterized in that** the weight ratio of 5-chloro-2-methyl-4-isothiazolin-3-one and 2-methyl-4-isothiazolin-3-one in the mixture amounts to 100:1 to 1:100, preferably 10:1 to 1:10 and in particular 5:1 to 1:1.

8. Composition according to Claim 7, **characterized in that** the weight ratio of 5-chloro-2-methyl-4-isothiazolin-3-one to 2-methyl-4-isothiazolin-3-one amounts to 3:1.

9. Composition according to one of Claims 1 to 8, **characterized in that** it comprises
c) at least one solvent and/or solubilizer and
d) if appropriate, one or more additives selected from amongst corrosion inhibitors, alkalizing agents, colorants, fragrances, viscosity modifiers, antifoams, emulsifiers, dispersants, complexing agents, detergent components, surfactants, pigments, essential oils, odour-modifying additives, lubricant additives, maintenance additives, fillers, polymers, microbicidal active ingredients and stabilizers.

10. Composition according to Claim 9, **characterized in that** it contains water as the solvent (component c)).

11. Composition according to Claim 8 or 9, **characterized in that** it contains the components a) to d) in the following amounts (in each case based on the weight of the total composition):
a) 0.01 to 99.99% by weight (preferably 5 to 40% by weight and in particular 1 to 20% by weight),
b) 0.0001 to 5% by weight (preferably 0.001 to 1% by weight and in particular 0.01 to 0.4% by weight),
c) 0 to 99.9899% by weight (preferably 50 to 99% by weight and in particular 80 to 98% by weight) and
d) if appropriate, 0 to 50% by weight (preferably 1 to 40% by weight and in particular 5 to 20% by weight).

12. Composition according to Claim 11, **characterized in that** it contains
a) 0.1 to 5% by weight (preferably 0.5 to 3% by weight and in particular 0.95 to 1.55% by weight) of 5-chloro-2-methyl-4-isothiazolin-3-one and 0.03 to 1.8% by weight (preferably 0.15 to 1% by weight and in particular 0.3 to 0.5% by weight) of 2-methyl-4-isothiazolin-3-one,
b) 0.0001 to 1% by weight (preferably 0.01 to 0.5% by weight and in particular 0.15 to 0.25% by weight) of 2,2'-dithiobis(pyridine N-oxide) and
c) 50 to 99.8699% by weight (preferably 80 to 99.5% by weight and in particular 97.7 to 98.6% by weight) of water
(in each case based on the weight of the total composition).

13. Use of a microbicidal composition according to one of Claims 1 to 12 in technical products.

14. Use according to Claim 13, **characterized in that** the technical product is a plant protection composition, a composition for the treatment of seed, a technical preservative, in particular a preservative for packagings, an additive for cooling lubricants, a fuel additive, a paint, a colour, a technical dispersion or emulsion, a disinfectant, in particular in fields where increased fungal attack can be expected, a composition for controlling parasites and plants, a pruning compound, a film preservative for external and, in particular, internal use, a timber preservative or a preservative for the fountain solution preservation of printing plates in the printing and photographic industries.

15. Use of 2,2'-dithiobis(pyridine N-oxide) as stabilizer in a low-salt or salt-free microbicidal composition containing at least one fungicide selected from among isothiazolone derivatives of the formula 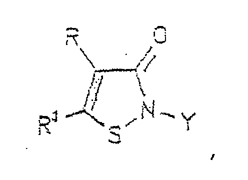 in which
Y is a (C₁-C₁₈)-alkyl or (C₃-C₁₂)-cycloalkyl group which can be substituted by one or more hydroxyl, halogen, cyano, alkylamino, dialkylamino, aryl, amino, carboxyl, carbalkyloxy, alkoxy, aryloxy, alkylthio, arylthio, haloalkoxy, cycloalkylamino, carbamoxy or isothiazolonyl groups, an unsubstituted or halogen-substituted (C₂-C₈)-alkenyl or alkynyl group, a (C₇-C₁₀)-aralkyl group which can be substituted by one or more halogen atoms or one or more (C₁-C₄)-alkyl or (C₁-C₄)-alkoxy groups, or an aryl group which can be substituted by one or more halogen atoms, nitro, (C₁-C₄)-alkyl, (C₁-C₄)-alkylacrylamino, carb (C₁-C₄)-alkoxy or sulphamyl groups, and
R and R¹ are in each case independently hydrogen, halogen, a (C₁-C₄)-alkyl group or a (C₄-C₈)-cycloalkyl group or are linked with one another to form a benzoisothiazolonyl group.

16. Use according to Claim 15, **characterized in that** the salt content in the composition amounts to less than 1% by weight, preferably less than 0.2% by weight and in particular less than 0.1% by weight (in each case based on the weight of the total composition).

17. Composition according to Claim 15, **characterized in that** it is essentially free from any salt.

18. Use according to one of Claims 15 to 17, **characterized in that** the microbicidal preparation is a microbicidal composition according to one of Claims 1 to 12.
